Europäisches Patentamt

European Patent Office

Office européen des brevets

(19)

(11) Veröffentlichungsnummer: **0 235 593**
**A1**

## (12) EUROPÄISCHE PATENTANMELDUNG

(21) Anmeldenummer: 87101387.6

(22) Anmeldetag: 02.02.87

(51) Int. Cl.⁴: **C01D 17/00**

(30) Priorität: 12.02.86 DE 3604350

(43) Veröffentlichungstag der Anmeldung:
09.09.87 Patentblatt 87/37

(84) Benannte Vertragsstaaten:
AT BE CH DE ES FR GB GR IT LI LU NL SE

(71) Anmelder: HOECHST AKTIENGESELLSCHAFT
Postfach 80 03 20
D-6230 Frankfurt am Main 80(DE)

(72) Erfinder: Koller, Klaus-Peter, Dr.
Carl-Orff-Weg 12
D-6232 Bad Soden am Taunus(DE)
Erfinder: Schwab, Wilfried, Dr.
Auf den Erlen 1D
D-6200 Wiesbaden(DE)

(54) Rückgewinnung von Cäsiumchlorid aus verunreinigten Lösungen.

(57) Die Rückgewinnung von Cäsiumchlorid aus verbrauchten Dichtegradienten-Lösungen erfolgt durch Extraktion lipophiler und färbender Bestandteile mit einem lipophilen Lösemittel, anschließende Extraktion mit einem polaren protischen organischen Lösemittel, Versetzen des Extraktionsrückstandes mit Perchlorationen und Überführen des ausgefällten Cäsiumperchlorats in Cäsiumchlorid.

EP 0 235 593 A1

## Rückgewinnung von Cäsiumchlorid aus verunreinigten Lösungen

Cäsiumchlorid-Dichtegradienten werden in der Gentechnik zur Auftrennung von DNA und RNA verwendet. Die zurückbleibenden, fast gesättigten CsCl-Lösungen, die üblicherweise mehr als 1 g CsCl/ml Lösung enthalten, werden bisher in der Regel verworfen, da sie neben organischen Verunreinigungen wie Saccharose, Tris-HCl-Puffer, Ethidiumbromid, EDTA, Zellfragmenten, DNA, RNA und Proteinen meistens noch anorganische Verunreinigungen enthalten, hauptsächlich Magnesiumchlorid und Natriumchlorid. Während man durch oxydative Zerstörung, beispielsweise durch Ausglühen, die organischen Verunreinigungen mehr oder weniger vollständig entfernen kann, ist kein Verfahren bekannt, das sowohl die organischen als auch die anorganischen Verunreinigungen zuverlässig entfernt, so daß das Cäsiumchlorid in der erforderlich hohen Reinheit zurückgewonnen werden kann. Trotz des hohen Preises werden deshalb bisher die cäsiumchloridhaltigen Lösungen verworfen, was zusätzliche Kosten mit der Entsorgung nach sich zieht.

Es wurde nun gefunden, daß man Cäsiumchlorid der erforderlichen hohen Reinheit aus den genannen Lösungen wiedergewinnen kann, wenn man diese Lösungen mit einem organischen Lösemittel, und zwar vorzugsweise zunächst mit einem lipophilen organischen Lösemittel und anschließend mit einem polaren, protischen organischen Lösemittel, extrahiert, aus dem Extraktionsrückstand das Cäsium als Perchlorat fällt und das Cäsiumperchlorat dann in Cäsiumchlorid überführt.

Weitere bevorzugte Ausgestaltungen der Erfindung werden im folgenden näher erläutert bzw. in den Patentansprüchen definiert.

Die Art und Menge der Verunreinigungen hängt natürlich vom Ausgangsmaterial ab. Da man vorteilhaft Rückstände mehrerer oder vieler Gradienten-Trennungen aufarbeiten wird, liegt im allgemeinen ein sehr komplexes System vor. Es kann deshalb erforderlich werden, die Extraktionsbedingungen anhand einfacher Vorversuche zu ermitteln.

Zur Extraktion der lipophilen und gefärbten Anteile eignen sich lipophile Lösemittel, beispielsweise Kohlenwasserstoffe wie Petrolether oder Toluol, vorzugsweise mäßig polare lipophile Lösemittel wie halogenierte Kohlenwasserstoffe, Ether oder Ester. Als halogenierte Kohlenwasserstoffe kommen vor allem nidermolekulare chlorierte Aliphaten in Betracht wie Dichlormethan, Trichlormethan, Tetrachlormethan, Trichlorethylen und Tetrachlorethylen. Als Ether eignen sich die niederen aliphatischen Ether wie Diethylether, Methyl-ethyl-ether oder Dibutyläther und als Ester aliphatische Ester aus niederen Alkanolen und niederen Fettsäuren wie Methyl-, Ethyl-oder Butylacetat sowie gegebenenfalls Mischungen mehrerer Lösemittel aus den gleichen oder verschiedenen genannten Gruppen. Im allgemeinen genügt eine einmalige Extraktion mit dem lipophilen Lösemittel, was jedoch natürlich nicht ausschließt, diese Extraktion mehrstufig vorzunehmen.

Als polares protisches organisches Lösemittel eignen sich inerster Linie die nicht unbegrenzt wassermischbaren Alkohole, also vor allem Alkanole mit mindestens 4 bis etwa 8 Kohlenstoffatomen. Auch diese Extraktion kann ein-oder mehrstufig durchgeführt werden. Vorteilhaft ist eine zweimalige Extraktion mit einem Butanol, vorzugsweise n-Butanol.

Der wäßrige Extraktionsrückstand wird nun mit Perchlorationen behandelt. Um den Salzanfall zu verringern, werden die Perchlorationen vorteilhaft in Form von Perchlorsäure, beispielsweise als 70 %ige wäßrige Perchlorsäure, zuge geben. Die Zugabe der Perchlorationen erfolgt zweckmäßig nicht auf einmal, sondern in mehreren Portionen oder besondes vorteilhaft graduell, im kleinen Maßstab beispielsweise durch allmähliches oder stetiges Zutropfen. Die Vollständigkeit der Fällung erkennt man daran, daß sich nach kurzem Absitzen des Niederschlags mit einem geringen Überschuß an Perchlorationen keine weitere Trübung bildet.

Das Cäsiumperchlorat fällt in gut kristalliner, farbloser Form an, die leicht abgetrennt werden kann. Das Salz kann getrocknet werden, beispielsweise bei etwa 50 bis 70°C im Vakuum, oder aber nach Waschen mit Eiswasser und Alkohol und Trockensaugen unmittelbar weiterverarbeitet werden.

Die Überführung des Cäsiumperchlorats in Cäsiumchlorid kann durch Erhitzen auf Temperaturen über 240°C erfolgen. Da diese Reaktion exotherm verläuft, ist gegebenenfalls -je nach Ansatzgröße und verfügbarer Apparatur -auf eine entsprechende Temperaturführung zu achten.

Die Umwandlung des Perchlorats in das Chlorid kann auch mit Hilfe von Ionenaustauschern erfolgen, was die Rückgewinnung des Perchlorations ermöglicht. Das bei der Regeneration erhaltene Eluat, entweder als Perchlorsäure-oder Natriumperchlorat-Lösung, kann dann, gegebenenfalls nach Aufkonzentrieren, erneut zur Fällung eingesetzt werden. Als Ionenaustauscher kommen hierbei alle handelsüblichen Anionenaustauscher in der Chloridform in Betracht. Neben festen werden auch flüssige Ionenaustauscher eingesetzt, letztere gelöst in einem organischen mit Wasser wenig mischbaren Lösemittel wie einem gegebenenfalls halogenierten Kohlenwasserstoff, beispielsweise Toluol, einem Ester wie Ethyl-oder Butylacetat, einem Ether wie Diethyl-oder Di-tert.-butyl-ether oder einem Keton wie Methyl-isobutyl-keton. Die Durchführung der Ionenaustausch-Reaktion und die Regenerierung des Austauschers erfolgen in an sich bekannter Weise bzw. nach den Angaben der Hersteller.

Aus den Eluaten der Ionenaustausch-Reaktion wird das Cäsiumchlorid durch Eindampfen isoliert. Der kristalline Rückstand ist klar wasserlöslich und frei von Natriumionen. Sofern das Ausgangsmaterial Kaliumionen enthält, was üblicherweise nicht der Fall ist, enthält das Produkt Kaliumchlorid. Geringe Mengen Kaliumchlorid stören jedoch die Verwendung des Produktes für Dichtegradienten-Trennungen nicht.

Die Ausbeute an Cäsiumchlorid, bezogen auf Cäsiumperchlorat, liegt über 90 %. Da eine exakte Bestimmung des Cäsiumchloridgehaltes in den Ausgangslösungen in Gegenwart nicht definierter Anteile an Saccharose schwierig ist, kann die Gesamtausbeute nur abgeschätzt werden. Da die Fällung als Perchlorat jedoch nahezu quantitativ verläuft, liegen die Gesamtausbeuten in der Größenordnung von 90 %. Das erfindungsgemäße Verfahren gestattet somit eine einfache und kostengünstige Regenerierung des Cäsiumchlorids aus verbrauchten Dichtegradienten-Lösungen.

In den folgenden Beispielen wird die Erfindung näher erläutert. Prozentangaben beziehen sich hierbei auf das Gewicht.

### Beispsiel 1

Wäßrige Cäsiumchlorid-Abfall-Lösung wird zur Entfernung lipophiler and gefärbter Anteile einmal mit Ethylacetat und zweimal mit n-Butanol extrahiert. Die Wasserphase wird dann unter Rühren tropfenweise mit 70 %iger wäßriger Perchlorsäurelösung bis zur Vollständigkeit der Cäsiumperchlorat-Fällung versetzt. Man rührt noch etwa 30 Min. bei Raumtemperatur und etwa 1 Stunde im Eisbad nach, saugt ab, wäscht zweimal mit wenig Eiswasser, dann mehrmals mit Ethanol auf der Nutsche nach. Das farblose, gut kristalline Cäsiumperchlorat wird im Vakuumtrockenschrank bei 50 bis 70°C getrocknet.

Anstelle der Perchlorsäurelösung kann auch eine 20 %ige wäßrige Natriumperchloratlösung eingetropft werden. In diesem Falle wird der gesammelte Niederschlag in warmem Wasser digeriert, dann die Suspension etwa eine Stunde im Eisbad nachgerührt, abgesaugt und wie vorstehend beschrieben weiter behandelt.

Es ist auch möglich, das Cäsiumperchlorat unmittelbar nach dem Trockensaugen für die weitere Verarbeitung einzusetzen.

Pro Liter Abfall-Lösung erhält man durch Fällen mit etwa 450 ml 70 %iger Perchlorsäure 1 kg Cäsiumperchlorat.

### Beispiel 2

70 g (0,3 Mol) fein zerriebenes Cäsiumperchlorat werden in 300 ml Wasser suspendiert. Man versetzt mit 0,5 Mol-Äquivalent eines stark basischen Ionenaustauschers in der Chloridform (400 ml [R] AMBERLITE IRA 410, Warenzeichen der Rohm & Haas Company, Gel-Typ, auf Basis StyrolDivinylbenzol, Funktionalität : quaternäres Ammonium; 16-50 Wet Mesh) und rührt bis zur vollständigen Auflösung des Cäsiumperchlorats, was je nach Rührgeschwindigkeit etwa 2 1/2 bis 4 Stunden dauert. Nach Absaugen wird der Ionenaustauscher mit 2 x 100 ml Wasser gründlich gewaschen und die Lösung auf eine Säule (Durchmesser 8 -10 cm) mit weiteren 300 ml des Austauschers gegeben. Nach etwa 15 Minuten wird tropfenweie im Lauf von 3 bis 4 Stunden eluiert, mit Wasser nachgewaschen und die Wasserphase bis zur Trockene eingeengt. Der kristalline Rückstand wird mit etwa 200 ml Ethanol aufgenommen, abgesaugt und im Vakuumtrockenschrank bei 80 bis 100°C getrocknet. Man erhält 47,05 g, entsprechend 93 %, Cäsiumchlorid mit einem Wassergehalt von etwa 0,6 %. Das Produkt ist klar wasserlöslich und frei von Natriumionen.

Zur Regeneration wird der gesamte Ionenaustauscher auf der verwendeten Säule mit 0,5 1 2N Natronlauge, etwa 2 1 Wasser, 2 x 0,5 1 2N Salzsäure und bis zur neutralen Reaktion mit Wasser gewaschen.

### Beispiel 3

23,2 g (0,1 Mol) Cäsiumperchlorat werden in 80 ml Wasser suspendiert. Man fügt eine Lösung von 0,15 Mol-Äquivalent eines flüssigen basischen Ionenaustauschers in der Chloridform ( AMBERLITE LA-2, hochmolekular, wasserunlöslich, öllöslich, Typ: sekundäres Amin; 75 ml, gelöst in 225 ml Methylisobutylketon) zu und rührt intensiv bis zur völligen Auflösung des Cäsiumperchlorats, was etwa 45 Minuten erfordert. Nach Phasentrennung wird die Wasserphase nochmals 20 bis 30 Minuten mit der Lösung von 0,05 Mol-Äquivalent desselben Austauschers gerührt. Nach erneuter Phasentrennung wird die kombinierte Wasserphase einmal mit Ethylacetat extrahiert, zur Trockene eingeengt, der kristalline Rückstand mit Ethanol aufgenommen, abgesaugt und im Vakuumtrockenschrank bei 80 bis 100°C getrocknet. Man erhält 15,65 g, entsprechend 93 %, klar wasserlösliches Cäsiumchlorid.

Die Regeneration des Ionenaustauschers erfolgt durch intensives Schütteln mit 0,2 1 2N Natronlauge (etwa 5 Minuten), zweimaliges Schütteln mit Wasser, dreimal je 10 Minuten intensives Rühren mit jeweils 80 ml 2N Salzsäure und Neutralwaschen mit Wasser.

Beispiel 4

Das Auflösen des Perchlorats und das Entfernen gelöster Perchloratspuren können auch derart kombiniert werden, daß man zunächst, wie in Beispiel 3 beschrieben, mit 1,5 Mol-Äquivalent des flüssigen, gelösten Ionenaustauschers im wäßrig-organischen Zweiphasensystem behandelt, bis eine klare wäßrige Phase entsteht. Nach Phasentrennung und Extraktion mit Ethylacetat wird die Wasserphase, wie in Beispiel 2 beschrieben, über eine Säule mit 0,5 -1 Mol-Äquivalent des festen Ionenaustauschers gegeben. Ausbeute und Reinheit des Produktes entsprechen den Angaben in Beispiel 2 und 3.

## Ansprüche

1. Verfahren zur Rückgewinnung von Cäsiumchlorid aus verbrauchten Dichtegradienten-Lösungen, dadurch gekennzeichnet, daß man die Lösungen mit einem organischen Lösemittel extrahiert, die Cäsiumionen aus dem Extraktionsrückstand als Perchlorat ausfällt und dieses in Cäsiumchlorid überführt.

2. Verfahren nach Anspruch 1, dadurch gekennzeichnet, daß man die Lösungen zunächst mit einem lipophilen und anschließend mit einem polaren protischen organischen Lösemittel extrahiert.

3. Verfahren nach Anspruch 2, dadurch gekennzeichnet, daß das lipophile Lösemittel mäßig polar ist.

4. Verfahren nach Anspruch 2 oder 3, dadurch gekennzeichnet, daß das lipophile Lösemittel ein halogenierter Kohlenwasserstoff, ein Ether oder ein Ester ist.

5. Verfahren nach Anspruch 2, 3 oder 4, dadurch gekennzeichnet, daß das lipophile Lösemittel Dichlormethan, Trichlormethan, Tetrachlormethan, Trichlorethylen, Tetrachlorethylen, Diethylether, Methyl-ethyl-ether, Dibutylether, Methyl-, Ethy-oder Butylacetat sowie eine Mischung aus solchen Lösemitteln ist.

6. Verfahren nach Anspruch 2, 3, 4 oder 5, dadurch gekennzeichnet, daß das polare protische Lösemittel ein Alkanol mit 4 bis 8 Kohlenstoffatomen ist.

7. Verfahren nach einem oder mehreren der vorhergehenden Ansprüche, dadurch gekennzeichnet, daß man die Cäsiumionen mit Perchlorsäure fällt.

8. Verfahren nach einem oder mehreren der vorhergehenden Ansprüche, dadurch gekennzeichnet, daß die Überführung in das Cäsiumchlorid durch thermische Zersetzung erfolgt.

9. Verfahren nach einem oder mehreren der vorhergehenden Ansprüche, dadurch gekennzeichnet, daß die Überführung in das Cäsiumchlorid durch Ionenaustausch erfolgt.

10. Verfahren nach Anspruch 9, dadurch gekennzeichnet, daß man in einem flüssig-flüssig- und/oder fest-flüssig-Zweiphasensystem arbeitet.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | CHEMICAL ABSTRSACTS, Band 66, Nr. 5, 30. Januar 1967, Seite 1629, Zusammenfassung Nr. 16954n, Columbus, Ohio, US; R.R. WRIGHT et al.: "Preparation and recovery of cesium compounds for density gradient solutions", & NATL. CANCER INST. MONOGRAPH No. 21, 241-9(1966) | 1 | C 01 D 17/00 |
| | --- | | |
| A | CHEMICAL ABSTRACTS, Band 92, Nr. 20, 19. Mai 1980, Seite 674, Zusammenfassung Nr. 173665y, Columbus, Ohio, US; K. BOGUSLAWSKA et al.: "Synthesis of cesium chloride of special purity", & ZESZ. NAUK. POLITECH. SLASK., CHEM. 1979, (88), 161 | 1 | |
| | --- | | RECHERCHIERTE SACHGEBIETE (Int. Cl.4) |
| A | GMELIN-INSTITUT: "GMELINS HANDBUCH DER ANORGANISCHEN CHEMIE", Nr. 25, Auflage 8, Lieferung 2, 1983, Verlag Chemie, Weinheim, DE * Seite 14, Zeilen 55-66; Seite 168, Zeilen 38-45 * | 1 | C 01 D |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 24-06-1987 | MINI A.E. |